# EUROPEAN PATENT APPLICATION

(11) **EP 1 777 058 A2**
(43) Date of publication of application: **25.04.2007**
(21) Application number: 06255340.9
(22) Date of filing: 17.10.2006
(51) Int. Cl.: B29C 65/16

(54) **Method and apparatus for laser welding thermoplastic resin members**

(30) Priority: 19.10.2005 JP 2005303798
(71) Applicant: TOYOTA JIDOSHA KABUSHIKI KAISHA, Toyota-shi, Aichi-ken 471-8571 (JP); E.I. DUPONT DE NEMOURS AND COMPANY, Wilmington, Delaware 19898 (US)
(72) Inventor: Nakajima, Katsuhiko, c/o Toyota Jidosha K.K., Toyota-shi, Aichi-ken 471-8571 (JP); Watanabe, Toshio, c/o Toyota Jidosha K.K., Toyota-shi, Aichi-ken 471-8571 (JP); Nakamura, Hideo, c/o Toyota Jidosha K.K., Toyota-shi, Aichi-ken 471-8571 (JP); Mori, Hiroshi, c/o Du Pont Kabushiki Kaisha, Tokyo 100-6111 (JP); Fujita, Susumu, c/o Du Pont Kabushiki Kaisha, Utsunomiya-shi, Tochigi 321-3231 (JP); Nakatani, Mitsunobu, c/o Du Pont Kabushiki Kaisha, Utsunomiya-shi, Tochigi 321-3231 (JP)
(74) Representative: Smith, Samuel Leonard

(57) **Abstract**

A method and apparatus for laser welding, whereby high welding strength, a low degree of variation in strength, and lack of occurrence of burrs can be achieved when two members formed of thermoplastic resin material are welded, are provided. In a laser welding apparatus 1, contact surfaces 4 of a first member 2 formed of transmissive thermoplastic resin that transmits a laser beam and a second member 3 formed of absorptive thermoplastic resin that absorbs a laser beam are joined by melting via laser beam R. The apparatus is equipped with a casing 5 that accommodates the first member and the second member, a vacuum pump 6 that reduces the pressure inside the casing, and a laser beam generator 10, whereby at least one of the contact surfaces of the first member and the second member becomes melted. In the apparatus, the first member and the second member are made to come into contact with each other under a reduced pressure atmosphere, and contact surfaces of the two members are irradiated with laser beam R from the side of the first member that transmits laser beam.

## Description

### BACKGROUND OF THE INVENTION

### Field of the Invention

The invention relates to a method and apparatus for laser welding thermoplastic resin members. In particular, the invention relates to a method and apparatus for joining a member formed of a transmissive thermoplastic resin that transmits a laser beam with a member formed of an absorptive thermoplastic resin that absorbs a laser beam by melting them.

### Background Art

In response to the demand in recent years for reducing the weight and cost of components in various fields, such as automobile components, such components are often made of resin materials and formed as resin molded items. When a resin molded item having a complex shape is to be formed, a plurality of component parts of the resin molded item are molded in advance and then jointed together by welding for productivity enhancing purposes.

As an example of a conventional method for welding such resin molded items, the method for laser welding resin parts described in Patent Document 1 is carried out in the following manner: laser beam irradiation is carried out while the vicinity of at least one of the joining end surfaces of a transmissive resin member and a absorptive resin member is under a reduced pressure atmosphere in an irradiation step, wherein joining end surfaces of a transmissive resin member and a absorptive resin member, which have transmissivity and absorptivity with respect to a laser beam as a heat source, respectively, are joined together by heating and melting them.

[Patent Document 1] JP Patent Publication (Kokai) No. 2002-283457 A

### SUMMARY OF THE INVENTION

In the method for laser welding resin components described above, sufficient joining strength can be obtained without using working jigs even in a case where gaps exist between the joining end surfaces; however, nonuniformity in strength might be found in the welded portions of the two members. That is, melted resin on the contact surfaces disperses widely on the welded surfaces so that the heat generated is diffused. As a result, a difference is created between the welding strength of a resin-filled gap portion and that of a well-welded portion. In addition, such factors might cause the occurrence of burrs of welded resin on the reduced pressure side of the welded portion. Specifically, due to difference between the pressure inside and that outside the case, welded resin is frequently extruded inside the case, resulting in the occurrence of burrs.

The present invention is made in view of the above problem. It is an objective of the present invention to provide a method and apparatus for laser welding thermoplastic resin members, whereby welding strength upon the welding of resin members can be improved and variation in the welding strength can be reduced. It is another objective of the present invention to provide a method and apparatus for laser welding thermoplastic resin members, whereby reduction in the occurrence of burrs extruded from the welded portion and improved product quality can be achieved.

To attain the above objective, in the method for laser welding thermoplastic members according to the present invention, a first member formed of transmissive thermoplastic resin that transmits a laser beam and a second member formed of absorptive thermoplastic resin that absorbs a laser beam are made to come into contact with each other, and contact surfaces of the members are joined by melting using a laser beam. The method is characterized in that the first member and the second member are made to come into contact with each other under a reduced pressure atmosphere, and the contact surfaces of the two members are irradiated with a laser beam from the side of the first member.

In the method for laser welding thermoplastic resin according to the present invention, the configuration of which is as described above, a first member formed of transmissive thermoplastic resin that transmits a laser beam and a second member formed of absorptive thermoplastic resin that absorbs a laser beam are made to come into contact with each other. The two members are irradiated with a laser beam from the side of the first member that transmits a laser beam, and energy accumulates on the surface of the second member, which does not transmit a laser beam, resulting in heat generation. Due to further laser beam irradiation, the quantity of heat generated increases, the contact surface of the first member is simultaneously heated via the contact surface of the second member, and contact surfaces of the two members become melted, so that the two members are welded together. Since the two members come into contact with each other under a reduced pressure atmosphere, the heat generated upon welding is not diffused toward the outside of the system. Thus, melted polymer is slowly cooled so that failure phenomena due to quenching of the polymer can be avoided. Therefore, a uniform welded portion is obtained so that welding strength can be improved and variation in welding strength can be reduced.

In another embodiment of the method for laser welding thermoplastic resin members according to the present invention, a first member formed of transmissive thermoplastic resin that transmits a laser beam and a second member formed of absorptive thermoplastic resin that absorbs a laser beam are made to come into contact with each other, and contact surfaces of the members are joined by melting using a laser beam. The method is characterized in that: the first member and the second member are made to come into contact with each other under an atmosphere containing a gas having low heat conductivity or an inert gas; and the contact surfaces of the two members are irradiated with a laser beam from the side of the first member. Preferably, such gas having low heat conductivity is a gas having a heat conductivity lower than that of the air. Preferred examples thereof include nitrogen, carbonic acid gas, ammonia gas, and the like. Examples of inert gas that can be used include rare gases such as helium, argon, and neon. A combination of the aforementioned gases can also be used.

In the method for laser welding thermoplastic resin members according to the present invention, the configuration of which is as described above, gas inside a casing that accommodates two members subjected to welding is replaced with a gas having low heat conductivity, an inert gas, or the like so that heat diffusion toward the outside of the casing can be suppressed. Thus, melted polymer is slowly cooled, and failure phenomena due to the quenching of the polymer can be avoided, such that the cooling rate can be reduced. As a result, the degree of crystallinity of the welded portion can be increased, resulting in improvement of welding strength and reduction of variation in strength.

In addition, the apparatus for laser welding thermoplastic resin members according to the present invention is a welding apparatus wherein contact surfaces of a first member formed of transmissive thermoplastic resin that transmits a laser beam and a second member formed of absorptive thermoplastic resin that absorbs a laser beam are joined by melting using a laser beam. The apparatus is equipped with a casing that accommodates the first member and the second member, a pressure-reducing means that reduces the pressure inside the casing, and a laser beam generator, whereby at least one of the contact surfaces of the first member and the second member becomes melted. The contact surfaces of the two members are irradiated with a laser beam from the side of the first member.

In the apparatus for laser welding, the configuration of which is as described above, pressure inside the casing that accommodates two members is reduced when two members formed of thermoplastic resin are welded, so that the air, through which heat is diffused, become rarefied, resulting in the suppression of heat diffusion from polymer that has become melted by heating by laser beam irradiation. Thus, temperature fluctuations due to the shapes of members or the like can be reduced and the quenching of the melted portion can be prevented. Therefore, the degree of crystallinity of the melted portion can be improved by slow cooling, resulting in improvement of welding strength and reduction of variation in strength.

Further, in another embodiment of the apparatus for laser welding thermoplastic resin members according to the present invention, contact surfaces of a first member formed of transmissive thermoplastic resin that transmits a laser beam and a second member formed of absorptive thermoplastic resin that absorbs a laser beam are joined by melting using a laser beam. The apparatus is equipped with a casing that accommodates a first member and a second member, a gas supplying means that supplies a gas having low heat conductivity or an inert gas into the casing, and a laser beam generator, whereby at least one of the contact surfaces of the first member and the second member becomes melted. Preferably, the gas supplying means supplies nitrogen gas, carbonic acid gas, ammonia gas, helium gas, argon gas, or neon gas.

In the laser welding apparatus, the configuration of which is as described above, a gas having low heat conductivity or an inert gas is supplied into a casing that accommodates two members formed of thermoplastic resin when the two members are welded, so that heat conductivity in a space inside the casing is reduced, resulting in the suppression of heat diffusion from polymer that has become melted by heating by laser beam irradiation. Thus, temperature fluctuations due to the shapes of members or the like can be reduced and the quenching of a melted portion can be prevented. Therefore, the degree of crystallinity of a melted portion can be improved by slow cooling, resulting in the improvement of welding strength and reduction of variation in strength.

In the laser welding method and apparatus according to the present invention, the type of resin used as the transmissive thermoplastic resin that transmits a laser beam is not particularly limited as long as thermoplasticity is imparted to such resin and the resin can transmit a laser beam as a heat source. Examples of such resin include polyamide (PA) such as nylon 6 (PA6) or nylon 66 (PA66); polyethylene (PE); polypropylene (PP); styrene-acrylonitrile copolymer; polyethylene terephthalate (PET); polystyrene; ABS; polymethylmethacrylate (PMMA); polycarbonate (PC); and polybutylene terephthalate (PBT). In addition, resin to which a coloring agent or reinforced fiber such as glass fiber or carbon fiber is added according to need may be used. The phrase "transmit a laser beam" indicates that laser beam transmissivity is preferably 20% or more, more preferably 50% or more, further preferably 80% or more, and particularly preferably 90% or more.

The type of resin used as the absorptive thermoplastic resin that absorbs a laser beam is not particularly limited as long as thermoplasticity is imparted to such resin and the resin can absorb a laser beam as a heat source while not transmitting it. Examples thereof include resin obtained by mixing the following with a given coloring agent such as carbon black, dye, pigment, or the like: polyamide (PA) such as nylon 6 (PA6) or nylon 66 (PA66); polyethylene (PE); polypropylene (PP); styrene-acrylonitrile copolymer; polyethylene terephthalate (PET); polystyrene; ABS; polymethylmethacrylate (PMMA); polycarbonate (PC); polybutylene terephthalate (PBT); and PPS. In addition, resin to which reinforced fiber such as glass fiber or carbon fiber is added according to need may be used. The phrase "absorb a laser beam" indicates that laser beam transmissivity is preferably 10% or less, more preferably 5% or less, and further preferably 1% or less.

In addition, preferably, a combination of resin used for a transmissive thermoplastic resin member and resin used for an absorptive thermoplastic resin member is a combination of resins compatible to each other. Examples of such combination include a combination of nylon 6 and nylon 66, PET and PC, and PC and PBT, in addition to a combination of two resins of the same type such as nylon 6 and nylon 6, or nylon 66 and nylon 66.

In the laser welding method and apparatus of the present invention, the type of a laser beam used for the laser beam irradiation on contact surfaces of two members can be adequately selected based on the relationship between an absorption spectrum of a transmissive resin material that transmits a laser beam and the thickness of the member (transmission length), for example. Examples of such the laser beam include a laser beam generated by an Nd: glass (neodymium³⁺: glass) laser, an Nd: YAG (neodymium³⁺: YAG) laser, a ruby laser, a helium-neon laser, a krypton laser, an argon laser, a H₂ laser, an N₂ laser, or a semiconductor laser. More preferred examples thereof include a laser beam generated by an Nd: YAG laser (wavelength of the laser beam: 1060 nm) and a semiconductor laser (wavelength of the laser beam: 500 to 1000 nm).

In addition, preferably, laser output power is 10 to 900 W. When the output power is less than 10 W, the output power is too low to melt the contact surfaces of the two resin members. When the output power exceeds 900 W, the excessive output power causes resin members to evaporate or deteriorate.

With the use of the method and apparatus for laser welding thermoplastic resin members of the present invention, two members formed of thermoplastic resin can uniformly be welded with high welding strength. In addition, since it is possible to prevent burrs from being extruded from the welded portion, the quality of welded resin members can be enhanced. Further, using a low-output laser, the facility cost of which is low, high welding strength can be obtained even in the case of a resin member having a high melting point, so that variation in the strength can be reduced.

### BRIEF DESCRIPTION OF THE DRAWINGS

Fig. 1 shows the configuration of the main part of one embodiment of the apparatus for laser welding according to the present invention.
Fig. 2 shows the configuration of the main part of another embodiment of the apparatus for laser welding according to the present invention.

### DESCRIPTION OF THE PREFERRED EMBODIMENTS

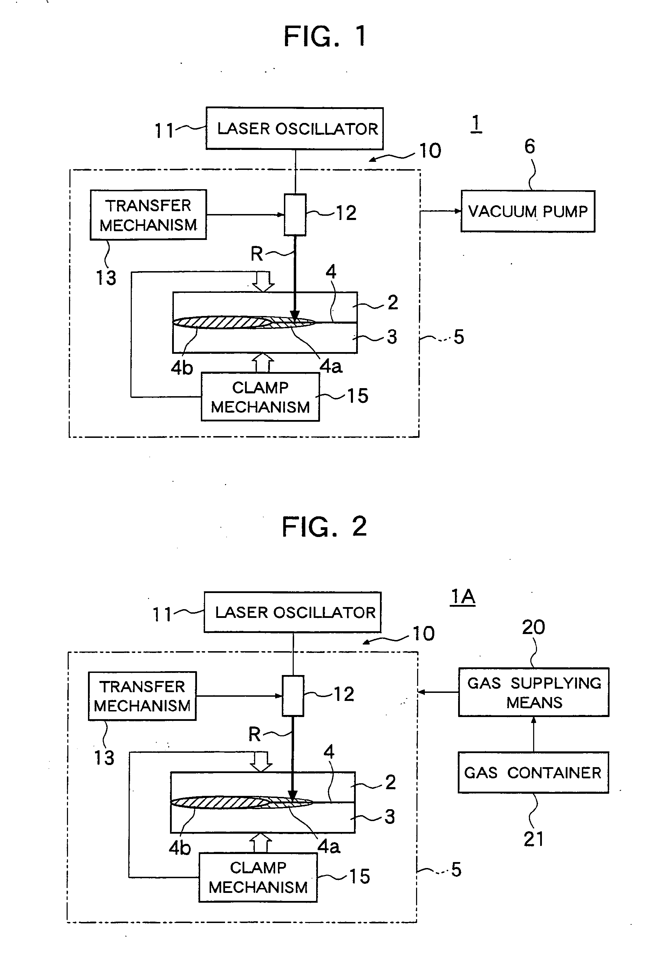

Hereafter, one embodiment of the apparatus for laser welding thermoplastic resin members according to the present invention will be described in detail based on the drawings. Fig. 1 shows the configuration of the main part of the apparatus for laser welding thermoplastic resin members according to the present embodiment.

In Fig. 1, with a laser welding apparatus 1 for thermoplastic members of the present embodiment, a first member 2 formed of transmissive thermoplastic resin that transmits a laser beam and a second member 3 formed of absorptive thermoplastic resin that absorbs a laser beam are made to come into contact with each other, and contact surfaces 4 are joined by melting using a laser beam. Further, the laser welding apparatus 1 is a welding apparatus wherein the first member and the second member are made to come into contact with each other under a reduced pressure atmosphere, and contact surfaces 4 of the two members are irradiated with a laser beam generated from a laser beam generator 10 from the side of the first member that transmits a laser beam, such that two members 2 and 3 are joined by melting.

The laser welding apparatus 1 is equipped with a casing 5 that accommodates the first member 2 and the second member 3, and also is equipped with a pressure-reducing means such as a vacuum pump 6 that reduces the pressure inside the casing to a level lower than that of the atmospheric pressure. The apparatus is composed in a manner such that the vacuum pump 6 functions to create a reduced pressure environment inside the casing 5, and two members 2 and 3 are accommodated under the reduced pressure atmosphere, such that the members can be welded together. The laser welding apparatus 1 is equipped with the laser beam generator 10, whereby at least one of the contact surfaces 4 of the first member 2 and second member 3 becomes melted.

The laser beam generator 10 is composed of a laser oscillator 11 and a laser head 12 that is connected to the laser oscillator via optical fiber. Preferably, a laser beam irradiated from the laser head is a semiconductor laser beam having a wavelength of 940 nm, for example, and the output power thereof is approximately 10 to 900 W. To the laser head 12, a transfer mechanism 13 that transfers the laser head upon welding at a processing speed of approximately 0.1 to 5 m/min, for example, is connected. The transfer means 13 that can appropriately be used is composed in a manner such that: a industrial robot is connected to the laser head 12; members are transferred using a two-dimensional stage or three-dimensional stage; a focal point created by a combination of an optical lens and a mirror is controlled; or a plurality of portions are simultaneously irradiated using a plurality of laser heads.

The first member 2 is formed with, for example, glass-reinforced nylon 6 as transmissive thermoplastic resin material. The second member 3 is formed with, for example, resin material obtained by mixing glass-reinforced nylon 6 with carbon black or a coloring agent. Laser beam absorptivity is imparted to the second member 3 formed of absorptive thermoplastic resin material that has been mixed with carbon black or a coloring agent. In addition, the second member 3 absorbs a laser beam so that the laser energy accumulates within it, resulting in heat generation.

The laser welding apparatus 1 is equipped with a clamp mechanism 15, whereby pressing force is imparted to two members 2 and 3 so that the members come into tight contact with each other. When two members 2 and 3 are joined by welding, the clamp mechanism 15 prevents the two members from being removed from each other due to volume expansion of the melted portion resulting from melting of the contact surface of at least one member via a laser beam. The clamp mechanism 15 functions to achieve uniform welding of two members. The clamp mechanism 15 that can be used is composed in a manner such that: two members are pressed against each other via a spring mechanism or the like; two members that have been placed on a base or the like are pressed from above; two members are pressed using fluid pressure such as hydraulic fluid pressure; or two members are pressed using compressed air.

The laser beam transmissivity of transmissive thermoplastic resin material that constitutes the first member 2 and transmits a laser beam is preferably 20% or more, more preferably 50% or more, further more preferably 80% or more, and particularly preferably 90% or more. The laser beam transmissivity of absorptive thermoplastic resin material that constitutes the second member 3 and absorbs a laser beam is preferably 10% or less, more preferably 5% or less, and further more preferably 1% or less. Since the resin material that constitutes the second member 3 almost completely lacks the ability to transmit a laser beam, it can be referred to as non-transmissive thermoplastic resin material. The second member 3 absorbs a laser beam while almost completely lacking the ability to transmit a laser beam. As a result, laser beam energy accumulates within it, resulting in heat generation.

Operation of the laser welding apparatus 1 for thermoplastic members in the present embodiment, the configuration of which is as described above, will be hereafter described. The first member 2 and the second member 3 are made to overlap each other in the casing 5 of the laser welding apparatus 1. Two members 2 and 3 are pressed tightly against each other by the clamp mechanism 15. The two members are disposed so as to overlap each other in a manner such that transmissive member 2 faces the laser head 12. When vacuum pump 6 is operated under such condition, the air in the casing 5 is discharged, resulting in reduction in the pressure inside such the casing. Preferably, the pressure is reduced so as to approach a vacuum state as nearly as possible. Specifically, the pressure preferably ranges from 0 to 1 kPa and more preferably from 0 to 0.1 kPa.

After reducing the pressure inside the casing 5, the laser beam generator 10 is operated to direct laser beam R toward contact surfaces 4 of two members 2 and 3. Then, heat is generated in the vicinity of contact surface 4 on the top side of second member 3 that absorbs a laser beam, since laser beam R is focused on the contact surface using an irradiation lens inside the laser head. When a given quantity of energy is provided to contact surfaces 4, the vicinity of contact surface 4 of second member 3 becomes melted, followed by melting of the contact surface of the first member 2. Thus, both melted portions 4a are fused together such that contact surfaces 4 of the first member 2 and second member 3 are fused together. As above, after both contact surfaces 4 of the two members have become melted, the laser head 12 is transferred by the transfer mechanism 13 so that the widths of melted portions 4a are extended. As a result, the melted portions of two members can be continuously formed.

The laser head 12 is transferred by the transfer mechanism 13 such that all portions subjected to welding become melted. Thereafter, the laser beam generator 10 is halted. After irradiation of laser beam R is halted, melted portions 4a are cooled. At such time, the casing 5 contains rarefied air under reduced pressure conditions so that thermal diffusion is suppressed, which in turn results in suppression of thermal diffusion toward the outside of the system. Thus, the cooling rate of melted polymer is reduced, and the polymer is not quenched but slowly cooled, such that welded portion 4b is formed. Since the melted portions are slowly cooled in such a manner, temperature fluctuations due to the shapes of members can be reduced. As a result, the degree of crystallinity of welded portion 4b increases, resulting in the improvement of welding strength and reduction of variations in strength. In addition, since the pressure inside the casing 5 is reduced, the melting point of polymer per se decreases. Thus, it becomes possible to perform welding with a low-output laser beam, leading to facility cost saving. Further, even in case welding is performed under a reduced pressure environment, two members in their entirety are disposed under the reduced pressure atmosphere, resulting in a lack of occurrence of burrs.

As described above, in the laser welding apparatus 1 of the present embodiment, the first member 2 formed of transmissive thermoplastic resin and second member 3 formed of absorptive thermoplastic resin are made to come into contact with each other under a reduced pressure atmosphere, and contact surfaces 4 are irradiated with a laser beam from the side of the first member 2 that transmits a laser beam, such that two members are welded. Thus, thermal diffusion toward the outside of the system is suppressed so that melted polymer is slowly cooled. In addition, temperature fluctuations due to the shapes of members or the like are reduced. Therefore, the degree of crystallinity of the welded portion is improved, resulting in the increased welding strength, and leading to reduction of variations in strength. As a result, occurrence of burrs is suppressed so that welding quality is improved.

Another embodiment of the present invention will be described in detail based on Fig. 2. Fig. 2 shows the configuration of the main part of another embodiment of a laser welding apparatus for thermoplastic resin members according to the present invention. In addition, compared with the aforementioned embodiment, the present embodiment is characterized in that gas inside the casing that accommodates two members subjected to welding is replaced with a gas having low heat conductivity or an inert gas such that welding is performed. Here, detailed description is omitted in terms of the configuration of the other parts of the present embodiment, which is substantially similar to the configuration of the corresponding parts of the aforementioned embodiment, by applying the same reference numerals used in the aforementioned embodiment to the present embodiment.

In Fig. 2, in the laser welding apparatus 1A for thermoplastic resin members of the present embodiment, the first member 2 formed of transmissive thermoplastic resin that transmits a laser beam and second member 3 formed of absorptive thermoplastic resin that absorbs a laser beam are made to come into contact with each other, and contact surfaces 4 are joined by melting using a laser beam irradiated from the laser beam generator 10. In addition, the laser welding apparatus 1A is an apparatus in which the first member and the second member are made to come into contact with each other under an atmosphere containing a gas having low heat conductivity or an inert gas, and contact surfaces 4 of the two members are irradiated with a laser beam from the side of the first member that transmits laser beam, so that two members 2 and 3 are welded.

The laser welding apparatus 1A is equipped with the casing 5 that accommodates the first member 2 and the second member 3. The casing is equipped with a gas supplying means 20 that supplies a gas having low heat conductivity or an inert gas, which is kept in a gas container 21. The apparatus is composed in a manner such that gas inside the casing 5 is replaced with a gas having low heat conductivity or an inert gas by the gas supplying means 20; and two members 2 and 3 are accommodated under the environment of a gas having low heat conductivity or an inert gas such that the members are welded. It is not necessary to replace 100% of the gas inside the casing with a gas having low heat conductivity or an inert gas. For instance, 50% or more of the gas inside thereof may be replaced.

As described in the aforementioned embodiment, the laser beam generator 10 is composed of the laser oscillator 11 and the laser head 12 that is connected to the laser oscillator via optical fiber. In addition, the transfer mechanism 13, which transfers the laser head 12 upon welding at a processing speed of, for example, approximately 0.1 to 5 m/min, is connected to the laser head. Further, the laser welding apparatus 1A is equipped with the clamp mechanism 15, with which pressing force is imparted to two members 2 and 3 such that they come into tight contact with each other. Such configuration is equivalent to that in the aforementioned embodiment. Thus, detailed description is omitted here. Also, detailed description regarding the first member 2 and the second member 3 is omitted since the configuration thereof is equivalent to that in the aforementioned embodiment.

When the laser welding apparatus 1 A in the present embodiment is used for welding, the first member 2 and the second member 3 are made to overlap each other in the casing 5 and two members 2 and 3 are pressed tightly against each other by the clamp mechanism 15. Two members are disposed so as to overlap each other in a manner such that the transmissive member 2 faces the laser head 12. Under such conditions, the gas supplying means 20 is operated so that gas inside the casing 5a is replaced with a gas having low heat conductivity by supplying the gas thereinto, for example. A preferred example of such gas having low heat conductivity is a gas having heat conductivity lower than that of the air (0.0221 kcal/mh°C). Preferred examples thereof include nitrogen gas (0.0207 kcal/mh°C), carbonic acid gas (0.0125 kcal/mh°C), ammonia gas (0.0188 kcal/mh°C), and the like.

The laser beam generator 10 is operated under conditions whereby the gas inside the casing 5 is replaced with a gas having low heat conductivity or an inert gas. Then, contact surfaces 4 of two members 2 and 3 are irradiated and heated with laser beam R so that the vicinities of the contact surfaces become melted. Thus, melted portions 4a are formed. A gas having low heat conductivity or an inert gas exists surrounding the two members, resulting in the restriction of the quantity of heat diffusion from the melted portions via such gas. Therefore, the polymer of melted portions 4a is not quenched but is slowly cooled so that welded portion 4b is formed. That is, heat diffusion toward the outside of the system is suppressed so that the cooling rate is reduced. As a result, the degree of crystallinity of welded portion 4b is increased, resulting in the improvement of welding strength in the welded portion and the achievement of reduction of variations in strength.

As described above, in the laser welding apparatus 1 A of the present embodiment, two members 2 and 3 are made to come into contact with each other under an environment whereby the gas inside the casing 5 is replaced with a gas having low heat conductivity or an inert gas, and the contact surfaces of the two members are irradiated with a laser beam from the side of the first member formed of resin that has laser beam transmissivity, so that the two members are welded together. Thus, heat diffusion toward the outside of the system is suppressed so that melted polymer is slowly cooled. In addition, temperature fluctuations are reduced, and the degree of crystallinity of the welded portion is improved, resulting in increased welding strength. Therefore, variations in strength are reduced and the occurrence of burrs is suppressed, so that welding quality can be improved.

The embodiments of the present invention have been described above in detail. However, the present invention is not limited to the aforementioned embodiments. Thus, various modifications can be made without departing from the spirit described in the scope of the claim of the invention. For instance, a laser oscillator and a laser head that constitute a laser beam generating means may be incorporated together so as to be disposed movably inside a casing.

Needless to say, general-purpose thermoplastic resins, general-purpose engineering plastics, super engineering plastics, thermoplastic elastomers, and the like can be used, in addition to the thermoplastic resin described above. Preferably, transmissive thermoplastic resin that constitutes the first member and transmits a laser beam has a high transmissivity, while on the other hand, absorptive thermoplastic resin that constitutes the second member and absorbs a laser beam has a low transmissivity. Preferably, there is a great difference between the transmissivities of the two members.

### Industrial Applicability

In the present invention, a first member made of transmissive thermoplastic resin and a second member made of absorptive thermoplastic resin, which have different laser beam transmissivities, are selected so that it is possible to perform welding, whereby welding strength can be improved and variations in strength can be reduced. Thus, the present invention can be applied to the welding of various types of resin products or resin components.

## Claims

1. A method for laser welding thermoplastic members, wherein a first member formed of transmissive thermoplastic resin that transmits a laser beam and a second member formed of absorptive thermoplastic resin that absorbs a laser beam are made to come into contact with each other, and contact surfaces of the members are joined by melting using a laser beam, which is **characterized in that**:
the first member and the second member are made to come into contact with each other under a reduced pressure atmosphere; and
the contact surfaces of the two members are irradiated with the laser beam from the side of the first member.

2. A method for laser welding thermoplastic resin members, wherein a first member formed of transmissive thermoplastic resin that transmits a laser beam and a second member formed of absorptive thermoplastic resin that absorbs a laser beam are made to come into contact with each other, and contact surfaces of the members are joined by melting using a laser beam, which is **characterized in that**:
the first member and the second member are made to come into contact with each other under an atmosphere containing a gas having low heat conductivity or an inert gas; and
the contact surfaces of the two members are irradiated with the laser beam from the side of the first member.

3. The method for laser welding thermoplastic resin members according to claim 2, wherein the gas having low heat conductivity or the inert gas is nitrogen gas, carbonic acid gas, ammonia gas, helium gas, argon gas, or neon gas.

4. An apparatus for laser welding thermoplastic resin members, wherein contact surfaces of a first member formed of transmissive thermoplastic resin that transmits a laser beam and a second member formed of absorptive thermoplastic resin that absorbs a laser beam are joined by melting using a laser beam, which is equipped with:
a casing that accommodates the first member and the second member;
a pressure-reducing means that reduces the pressure inside the casing; and
a laser beam generator, whereby at least one of the contact surfaces of the first member and the second member becomes melted.

5. An apparatus for laser welding thermoplastic resin members, wherein contact surfaces of a first member formed of transmissive thermoplastic resin that transmits a laser beam and a second member formed of absorptive thermoplastic resin that absorbs a laser beam are joined by melting using a laser beam, which is equipped with:
a casing that accommodates the first member and the second member;
a gas supplying means that supplies a gas having low heat conductivity or an inert gas into the casing; and
a laser beam generator, whereby at least one of the contact surfaces of the first member and the second member becomes melted.

6. The apparatus for laser welding thermoplastic resin members according to claim 5, wherein the gas supplying means supplies nitrogen gas, carbonic acid gas, ammonia gas, helium gas, argon gas, or neon gas.
